(19) Europäisches Patentamt
European Patent Office
Office européen des brevets

(11) Numéro de publication: **0 065 436**
**B1**

(12) # FASCICULE DE BREVET EUROPEEN

(45) Date de publication du fascicule du brevet: **08.08.84**

(51) Int. Cl.³: **C 04 B 7/44**, C 04 B 7/36

(21) Numéro de dépôt: **82400723.1**

(22) Date de dépôt: **22.04.82**

(54) **Perfectionnements aux procédés et installations pour la fabrication du clinker de ciment par voie sèche.**

(30) Priorité: **15.05.81 FR 8109692**

(43) Date de publication de la demande: **24.11.82 Bulletin 82/47**

(45) Mention de la délivrance du brevet: **08.08.84 Bulletin 84/32**

(84) Etats contractants désignés: **BE CH DE GB IT LI LU NL**

(56) Documents cités:
**FR - A - 2 356 895**
**FR - A - 2 394 504**
**US - A - 3 895 955**

(73) Titulaire: **FIVES-CAIL BABCOCK, Société anonyme, 7 rue Montalivet, F-75383 Paris Cedex 08 (FR)**

(72) Inventeur: **Cosar, Paul, 48, rue du Montparnasse, F-75014 Paris (FR)**

(74) Mandataire: **Fontanié, Etienne, FIVES-CAIL BABCOCK 7, rue Montalivet, F-75383 Paris Cedex 08 (FR)**

**EP 0 065 436 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne la production du clinker de ciment par voie sèche suivant un processus consistant à préchauffer les matières premières dans un échangeur au moyen des fumées d'un four rotatif, où les matières préchauffées sont clinkérisées, et éventuellement d'une chambre de calcination où les matières préchauffées sont clacinées avant d'être envoyées dans le four.

Pour des raisons économiques, on cherche à utiliser en cimenterie comme ailleurs des combustibles pauvres tels que schistes houillers, déchets industriels ou agricoles, etc... Lorsque ces combustibles contiennent du soufre en proportion notable, leur utilisation en cimenterie pose des problèmes car il se forme dans la boîte à fumées du four et dans l'échangeur des concrétions qui perturbent la marche de l'installation et nécessitent des arrêts plus ou moins fréquents. Pour remédier à cet inconvénient, la solution classique consiste à rejeter à l'atmosphère une fraction des fumées du four en court-circuitant l'échangeur. Cette solution a l'inconvénient de diminuer le rendement thermique de l'installation. De plus, il est malgré tout nécessaire de prévoir des installations d'épuration des fumées coûteuses pour éviter la pollution de l'atmosphère.

Le but de l'invention est de permettre une utilisation des combustibles pauvres, à haute teneur en soufre, plus économique que celle qui est faite dans les installations connues.

Le procédé objet de l'invention est caractérisé en ce que le combustible solide est gazéifié, les gaz produits sont mis en contact avec une fraction des matières premières préchauffées ou non pour assurer leur désulfuration et les produits de la réaction de désulfuration sont séparés des dits gaz qui sont envoyés dans le four et/ou dans la chambre de calcination où ils sont brûlés.

Au contact des gaz chauds, le carbonate de calcium qui est un constituant des matières premières se décompose en gaz carbonique et chaux et celle-ci réagit avec les composés du soufre pour produire du sulfure de calcium qui peut être séparé des gaz. On réalise ainsi la désulfuration des gaz sans perte thermique. Un autre avantage de ce procédé est que la décomposition du carbonate de calcium, qui est une réaction endothermique, refroidit les gaz ce qui permet l'utilisation d'un générateur de gaz à haute température sans qu' il soit nécessaire de prévoir des revêtements réfractaires spéciaux dans les conduits reliant le générateur au four où à la chambre de calcination.

Les matières utilisées pour la désulfuration peuvent être injectées et mises en suspension dans les gaz à désulfurer qui circulent en courant ascendant, les produits de la réaction de désulfuration étant séparés des gaz dans un cyclone.

La fraction des matières premières utilisées pour la désulfuration représente de 2% à 10% du débit total des matières traitées dans l'échangeur.

Lorsque l'échangeur comporte plusieurs étages, en particulier s'il s'agit d'un échangeur à cyclones, les matières premières utilisées pour la désulfuration peuvent être prélevées à la sortie du dernier étage ou d'un étage intermédiaire. Elles peuvent aussi être prélevées à l'entrée de l'échangeur.

De préférence, la température des gaz en aval du point d'injection des matières premières sera maintenue entre 800°C et 950°C par réglage du débit des matières injectées dans les gaz.

Les produits de la réaction de désulfuration peuvent être transformés en gypse utilisable comme ajout dans le ciment produit.

La gazéification sera effectuée en lit fluidisé à haute température avec agglomération des cendres et décantation des agglomérats formés.

L'installation objet de l'invention est caractérisée en ce qu'elle comporte un gazogène relié au four et/ou à la chambre de calcination par un conduit comprenant un tronçon vertical dont l'extrémité inférieure est raccordée au gazogène, et un dispositif de distribution placé sur l'alimentation ou à la sortie de l'un des étages de l'échangeur pour diviser en deux le courant des matières entrant dans ou sortant de cet étage de l'échangeur et relié par un tuyau à la base du dit tronçon vertical pour amener une partie des matières préchauffées dans ledit tronçon.

Un cyclone est placé sur ledit conduit, à l'extrémité supérieure du dit tronçon, pour séparer du courant de gaz les matières solides en suspension.

Le gazogène est un réacteur à lit fluidisé à haute température dont le fond est constitué par une grille mobile qui est inclinée ou qui comporte une portion terminale aval inclinée et dont l'extrémité aval est située au niveau de la surface libre du lit fluidisé où à un niveau supérieur.

D'autres caractéristiques de l'invention apparaîtront à la lecture de la description qui suit et se réfère au dessin l'accompagnant qui montre, à titre d'exemple non limitatif, un mode de réalisation de l'invention.

L'unique figure de ce dessin est le schéma d'une installation pour la fabrication du ciment par voie sèche avec précalcination réalisée conformément à l'invention.

Cette installation est constituée par un four tubulaire rotatif 10, un échangeur comprenent un premier groupe de cyclones associé au four et un second groupe de cyclones associé à une chambre de calcination 12, un gazogène 14 et un refroidisseur de clinker 16.

Le premier groupe de cyclones comprend un cyclone double 2 et trois cyclones 3, 4 et 5. L'entrée du cyclone 5 est reliée au capot de fumées du four par un conduit 18 et les cyclones sont reliés entre eux par des conduits 20, 22 et 24, de telle sorte qu'ils sont traversés en série par les fumées du four qui sont aspirées par un ventilateur 26. La pointe de chacun des cyclones 2, 3 et 4 est reliée par un tuyau au conduit raccordé à l'entrée du cyclone précédent, en considérant le sens de circulation des fumées, et la pointe du cyclone 5 est reliée à un tuyau débouchant dans un conduit 28 amenant de l'air du refroidisseur de clinker 16 à la chambre de calcination 12.

Le second groupe de cyclones est formé d'un cyclone double 1 et de trois cyclones 6, 7 et 8 reliés entre eux par des conduits 30, 32 et 34 de la même manière que les cyclones du premier groupe. L'entrée du cyclone 8 est reliée à la sortie d'un cyclone 9 dont l'entrée est reliée à la sortie de la chambre de calcination 12, de sorte que le cyclone 9 et tous les cyclones du second groupe sont traversés par les gaz d'échappement de la chambre de calcination 12 qui sont aspirés par un ventilateur 36.

Le four 10 est chauffé par un brûleur 38. La chambre de calcination 12 est alimentée en gaz combustible par le gazogène 14 auquel elle est reliée par un conduit 40 sur lequel est placé un cyclone 42.

Le gazogène 14 est du type à lit fluidisé; son fond est formé par une grille mobile 15, inclinée et dont l'extrémité aval est située au niveau de la surface libre du lit fluidisé ou au-dessus de celle-ci.

Un distributeur 44 est placé à la pointe du cyclone 8. Il comporte deux sorties dont l'une est reliée au conduit 28 et l'autre au conduit 40. La répartition du débit des matières sortant du cyclone 8 entre ces deux sorties est réglée par un régulateur 46 en fonction de la température de gaz dans le conduit 40.

Les matières crues sont introduites en A dans le conduit 34 et transportées par les gaz qui y circulent jusqu'au cyclone 1 dont les deux moitiés reçoivent des débits d'air et de matière sensiblement égaux. Les matières séparées dans ces cyclones sont introduites respectivement dans les conduits 24 et 32.

Dans la première partie de l'échangeur, les matières traversent successivement les cyclones 2, 3, 4 et 5 et sont chauffées par les fumées du four qui circulent à contre-courant. Les matières sortant du cyclone 5 sont introduites dans le conduit 28 et entraînées par l'air qui y circule jusque dans la chambre de calcination 12.

Dans la seconde partie de l'échangeur, les matières sortant du cyclone 1 traversent successivement les cyclones 6, 7 et 8 et sont chauffées par les gaz d'échappement de la chambre de calcination. Les matières sortant du cyclone 8 sont divisées en deux courants par le dispositif de distribution 44. Ces deux courants ont des débits très différents: le courant le plus important est introduit dans le conduit 28 et l'autre courant, qui représente de 2% à 10%, par exemple 5%, du débit total des matières premières traitées dans l'échangeur, est injecté dans le conduit 40, à la sortie du gazogène 14.

Dans la chambre de calcination 12, les gaz combustibles produits dans le gazogène 14 brûlent avec l'air provenant du refroidisseur 16 et amené par le conduit 28. La chaleur produite assure la calcination des matières en suspension dans les gaz. Les matières calcinées sont entraînées par les gaz sortant de la chambre de calcination dans le cyclone 9 où elles sont séparées du courant gazeux; elles sont ensuite introduites dans le four 10 où se produit la clinkérisation. Le clinker sortant du four est refroidi dans le refroidisseur 16 au moyen d'air qui est ensuite utilisé comme air secondaire dans le four et dans la chambre de calcination.

Dans le gazogène 14, l'air injecté sous la grille 15 maintient le combustible à l'état fluidisé et assure sa combustion partielle. Le débit d'air est nettement inférieur au débit theoriquement nécessaire à la combustion et est réglé de façon à maintenir la température dans le lit à une valeur élevée pour permettre l'agglomération des cendres et la décantation des agglomérats formés qui se déposent sur la grille et sont extraits du lit par celle-ci.

Les gaz produits par le gazogène 14 ont une température de l'ordre de 1.100 °C à 1.200° C. Les matières introduites dans le conduit 40 ont pour effet d'abaisser la température des gaz à 900° C environ et d'assurer leur désulfuration suivant les réactions.

$$CaCO_3 \rightarrow CaO + CO_2$$
$$CaO + H_2S \rightarrow CaS + H_2O$$

Ces réactions sont favorisées par la température des gaz (entre 800 et 950° C) et la fine granulométrie des matières (inférieure à 100 $\mu$m) et s'effectuent très rapidement.

Les produits formés ainsi que les cendres entraînées par les gaz sont séparés dans le cyclone 42. En variante, un premier cyclone pourrait être placé sur le conduit 40, à la sortie du gazogène, pour séparer les cendres et les fines particules de combustible qui seraient renvoyées dans le gazogène, les matières premières servant d'agent désulfurant seraient injectées dans le conduit 40 en aval de ce premier cyclone, et les produits formés seraient séparés dans un second cyclone placé plus en aval sur le conduit 40.

Le sulfure de calcium formé peut être utilisé pour produire, dans des conditions économiques, le gypse qui doit être ajouté au clinker broyé pour fabriquer le ciment.

Le débit des matières prélevées à la sortie du cyclone 8 et introduites dans le conduit 40 est réglé, au moyen du régulateur 46, pour maintenir la température des gaz en aval du point d'injection des matières, égale à une valeur de consigne (de l'ordre de 900 °C) en aval du point d'introduction. Les matières premières utilisées pour la désulfuration peuvent être prélevées à la sortie de l'un quelconque des cyclones 1 à 8 de l'échangeur; éventuellement on pourra utiliser des matières premières froides, le distributeur 44 étant alors placé en amont de l'échangeur.

L'invention permet de réaliser une désulfuration beaucoup plus complète que les procédés classiques, consistant à rejeter à l'atmosphère

une partie des fumées, et à un coût bien inférieur.

Par ailleurs, l'utilisation d'un gazogène lit fluidisé avec agglomération des cendres permet d'éliminer facilement et sûrement la majorité des cendres, la partie restante étant séparée des gaz dans le cyclone 42, de sorte qu'il est possible d'utiliser des combustibles à forte teneur en cendres, notamment des schistes houillers ou bitumineux, sans nuire à la qualité du clinker.

**Revendications**

1. Procédé de production de clinker de ciment par voie sèche consistant à préchauffer les matières premières dans un échangeur au moyen des fumées d'un four rotatif, où les matières sont clinkérisées, et éventuellement d'une chambre de calcination où les matières préchauffées sont calcinées avant d'être envoyées dans le four, les calories nécessaires étant fournies, au moins en partie, par un combustible solide, caractérisé en ce que le combustible solide est gazéifié, les gaz produits sont mis en contact avec une fraction des matières premières pour assurer leur désulfuration et les produits de la réaction de désulfuration sont séparés des dits gaz qui sont envoyés dans le four et/ou dans la chambre de calcination où ils sont brûlés.

2. Procédé selon la revendication 1, caractérisé en ce que les matières utilisées pour la désulfuration sont injectées et mises en suspension dans les gaz à désulfurer qui circulent en courant ascendant.

3. Procédé selon la revendication 1 ou 2, caractérisé en ce que la fraction des matières utilisées pour la désulfuration représente de 2% à 10% du débit total des matières préchauffées dans l'échangeur.

4. Procédé selon la revendication 1, 2 ou 3, caractérisé en ce que les matières premières utilisées pour la désulfuration sont prélevées à la sortie de l'échangeur ou en un point intermédiaire de celui-ci.

5. Procédé selon la revendication 1, 2, 3 ou 4, caractérisé en ce que la température des gaz en aval du point d'injection des matières premières est comprise entre 800° C et 950° C.

6. Procédé selon la revendication 5, caractérisé en ce que le débit des matières utilisées pour la désulfuration est réglé pour maintenir la température des gaz en aval du point d'injection égale à une valeur de consigne.

7. Procédé selon l'une quelconque des revendications précédentes, caractérisé en ce que la gazéification est effectuée en lit fluidisé à une température permettant l'agglomération des cendres.

8. Installation pour la fabrication du ciment par voie sèche comportant un four rotatif de clinkérisation (10), un échangeur à plusieurs étages (1 à 8) où les matières premières sont préchauffées au moyen des fumées du four et éventuellement d'une chambre de calcination (12) placée entre l'échangeur et le four, et un gazogène (14) brûlant un combustible solide pour produire des gaz combustibles alimentant le four et/ou la chambre de calcination, caractérisée en ce que le conduit (40) reliant le gazogène au four et/ou à la chambre de calcination comporte un tronçon vertical dont l'extrémité inférieure est raccordée au gazogène (14), en ce qu'un dispositif de distribution (44) est prévu sur l'alimentation de l'échangeur ou à la sortie de l'un de ses étages pour diviser en deux le courant des matières avant leur entrée dans l'échangeur ou à la sortie du dit étage de l'échangeur et en ce que l'une des sorties de ce dispositif est reliée à la base du dit tronçon de conduit vertical pour amener une partie des matières préchauffées dans ledit tronçon.

9. Installation selon la revendication 8, caractérisée en ce qu'un cyclone (42) est placé sur ledit conduit (40), à l'extrémité supérieure du dit tronçon vertical, pour séparer les matières solides en suspension dans les gaz.

10. Installation selon la revendication 8 ou 9, caractérisée en ce que le gazogène (14) est un réacteur à lit fluidisé dont le fond est constitué par une grille mobile (15) qui est inclinée ou dont la partie terminale aval est inclinée de sorte que son extrémité aval soit située à un niveau supérieure au niveau du lit fluidisé.

**Patentansprüche**

1. Trockenverfahren zur Herstellung von Zementklinker, das darin besteht, die Rohstoffe in einem Wärmetauscher mit Hilfe von Rauchgasen eines Drehofens, in welchem die Rohstoffe klinkerisiert werden, vorzuwärmen und eventuell einer Brennkammer, in welcher die vorgewärmten Rohstoffe gebrannt werden, bevor sie in den Ofen eingeführt werden, wobei die erforderlichen Kalorien, zumindest zum Teil, durch einen festen Brennstoff geliefert werden, dadurch gekennzeichnet, daß der feste Brennstoff vergast wird, die erzeugten Gase mit einem Teil der Rohrstoffe in Berührung gebracht werden, um ihre Entschwefelung zu gewährleisten und die Reaktionserzeugnisse der Entschwefelung von den Gasen getrennt werden, die in den Ofen und/oder in die Brennkammer geleitet werden, in der sie gebrannt werden.

2. Verfahren gemäß Anspruch 1, dadurch gekennzeichnet, daß die für die Entschwefelung verwendeten Stoffe eingespritzt und in den zu entschwefelnden nach oben strömenden Gasen suspendiert werden.

3. Verfahren gemäß Anspruch 1 oder 2, dadurch gekennzeichnet, daß der für die Entschwefelung verwendete Anteil der Rohstoffe ungefähr 2% bis 10% des Gesamtdurchsatzes der im Wärmetauscher vorgewärmten Rohstoffe beträgt.

4. Verfahren gemäß Anspruch 1, 2 oder 3, dadurch gekennzeichnet, daß die für die Entschwefelung verwendeten Rohstoffe am Ausgang des

Wärmetauschers oder an einer Zwischenstelle desselben entnommen werden.

5. Verfahren gemäß Anspruch 1, 2, 3 oder 4, dadurch gekennzeichnet, daß die Temperatur der Gase hinter der Einspritzstelle der Rohstoffe zwischen 800°C und 950°C liegt.

6. Verfahren gemäß Anspruch 5, dadurch gekennzeichnet, daß der Durchsatz der für die Entschwefelung verwendeten Rohstoffe geregelt wird, um die Temperatur der Gase hinter der Einspritzstelle auf einem Sollwert zu halten.

7. Verfahren gemäß irgendeinem der obigen Ansprüche, dadurch gekennzeichnet, daß die Vergasung in einem Fließbett bei einer Temperatur stattfindet, die das Zusammenbacken der Aschen ermöglicht.

8. Anlage für die Zementherstellung im Trokkenverfahren mit einem Klinkerdrehofen (10), einem mehrstufigen Wärmetauscher (1 bis 8), in welchem die Rohstoffe mit Hilfe der Rauchgase des Ofens und eventuell der Rauchgase einer zwischen dem Wärmetauscher und dem Ofen befindlichen Brennkammer (12) vorgewärmt werden, und einem Gaserzeuger (14), der einen festen Brennstoff verbrennt, um für die Versorgung des Ofens und/oder der Brennkammer erforderlichen brennbaren Gase zu erzeugen, dadurch gekennzeichnet, daß die Leitung (40), die den Gaserzeuger mit dem Ofen und/oder der Brennkammer verbindet, einen senkrechten Abschnitt besitzt, dessen unteres Ende mit dem Gaserzeuger (14) verbunden ist, daß eine Verteilervorrichtung (44) am Eingang des Wärmetauschers oder am Ausgang einer seiner Stufen vorgesehen ist, die den Rohstoffstrom vor seinem Eintreten in den Wärmetauscher oder am Ausgang der betreffenden Wärmetauscherstufe in zwei Ströme aufteilt, und daß einer der Ausgänge der Verteilvorrichtung an der Basis des senkrechten Leitungsabschnitts angeschlossen ist, um einen Teil der vorgewärmten Rohstoffe in diesen Abschnitt zu leiten.

9. Anlage gemäß Anspruch 8, dadurch gekennzeichnet, daß ein Zyklon (42) am oberen Ende des senkrechten Abschnitts der Leitung (40) angeordnet ist, um die in den Gasen schwebenden Feststoffe von den Gasen zu trennen.

10. Anlage gemäß Anspruch 8 oder 9, dadurch gekennzeichnet, daß der Gaserzeuger (14) ein Reaktor mit Fließbett ist, dessen Boden aus einem Wanderrost (15) besteht, der geneigt ist oder dessen hinteres Endteil geneigt ist, so daß sein hinteres Ende sich auf einer höheren Ebene befindet als das Fließbett.

## Claims

1. A dry method for the production of cement clinker consisting in pre-heating the raw materials in a heat-exchanger by means of the flue gases of a rotary kiln, in which the materials are clinkered, and possibly those of a calcining chamber in which the pre-heated materials are calcined before passing into the kiln, the necessary heat being provided, at least partly, by a solid fuel, characterized in that the solid fuel is gasified, the gases produced are brought into contact with a portion of the raw materials to desulfurize them and the products of the desulfurization reaction are separated from said gases which pass into the kiln and/or in the calcining chamber where they are burnt.

2. A method according to claim 1, characterized in that the materials used for the desulfurization are injected and suspended in the gases to be desulfurized which flow in an upward stream.

3. A method according to claim 1 or 2, characterized in that the portion of the materials used for desulfurization represent 2% to 10% of the total flow of the materials pre-heated in the heat-exchanger.

4. A method according to claim 1, 2 or 3, characterized in that the raw materials used for the desulfurization are taken at the outlet of the heat-exchanger or at an intermediate point from the latter.

5. A method according to claim 1, 2, 3 or 4, characterized in that the temperature of the gases downstream of the injection point of the raw materials lies between 800 °C and 950°C.

6. A method according to claim 5, characterized in that the flow of the materials used for the desulfurization is adjusted so as to maintain the temperature of the gases downstream of the injection point at a set value.

7. A method according to any of the preceding claims, characterized in that gasification takes place in a fluidized bed at a temperature at which the ashes agglomerate.

8. An installation for the production of cement by a dry method comprising a clinkering rotary kiln (10), a multistage heat-exchanger (1 to 8) in which the raw materials are pre-heated by the flue gases of the kiln and possibly those of a calcining chamber (12) placed between the heat-exchanger and the kiln, and a gas generator (14) burning a solid fuel for producing combustible gases supplying the kiln and/or the calcining chamber, characterized in that the duct (40) connecting the gas generator to the kiln and/or to the calcining chamber comprises a vertical section whose lower extremity is connected to the gas generator (14), in that a distribution device (44) is provided on the heat-exchanger feed or at the outlet of one of its stages in order to divide the stream of materials into two before they enter the heat-exchanger or at the outlet of said heat-exchanger stage and in that one of the outlets of this device is connected to the base of said section of the vertical duct to bring a part of the raw materials into said section.

9. An installation according to claim 8, characterized in that a cyclone (42) is placed on said duct (40), at the upper extremity of said vertical section, to separate the solid materials in suspension in the gases.

10. An installation according to claim 8 or 9, characterized in that the gas generator (14) is a

fluidized bed reactor whose bottom consists of a travelling grate (15) which is inclined or whose terminal downstream part is inclined so that its downstream part is located at a level higher than that of the fluidized bed.

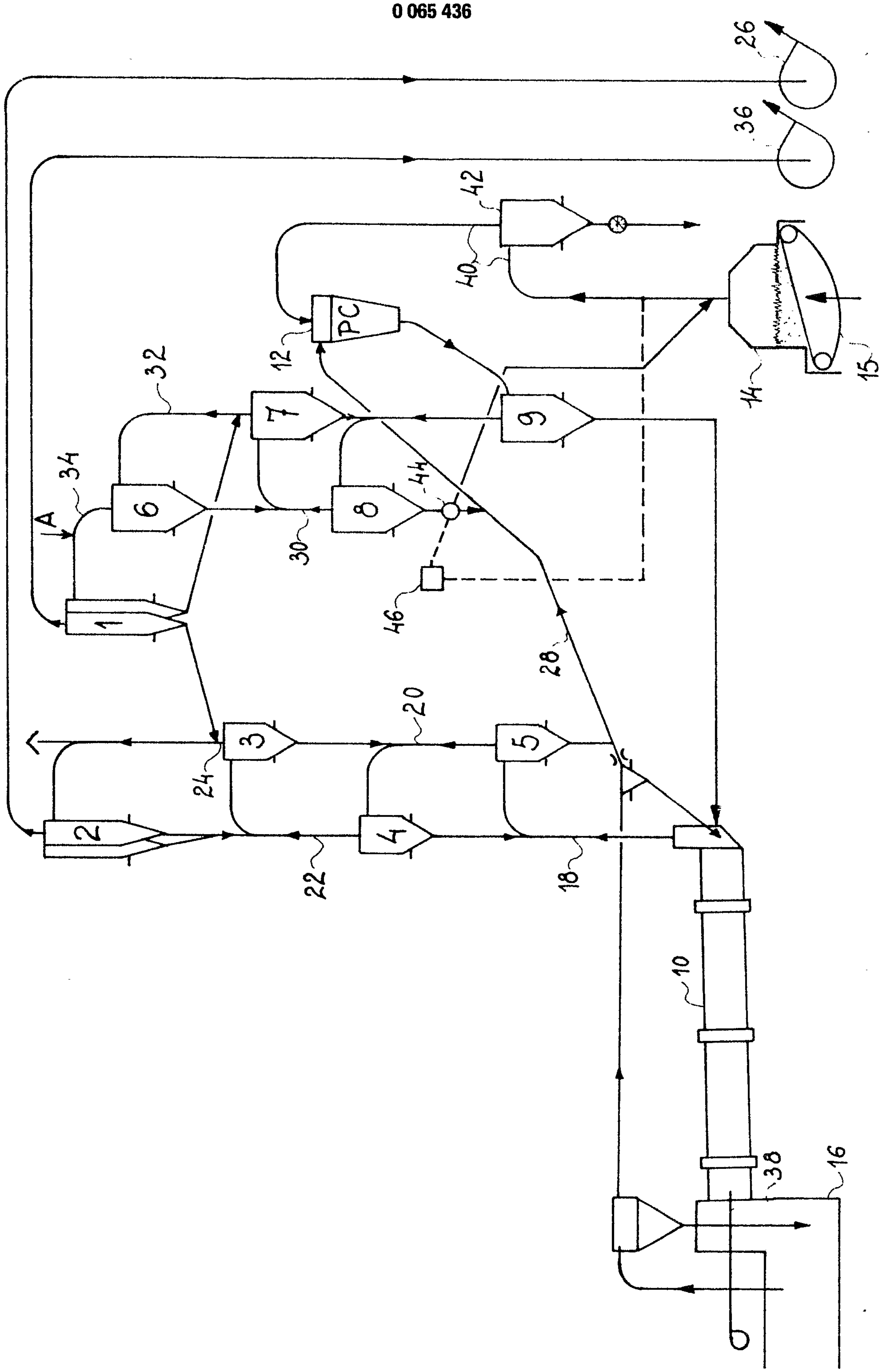
26
36
42
40
PC
12
32
34
A
1
2
3
4
5
6
7
8
9
44
30
46
28
14
15
20
24
22
18
10
38
16